(19) Europäisches Patentamt
European Patent Office
Office européen des brevets

(11) Publication number: 0 390 544 A2

(12) EUROPEAN PATENT APPLICATION

(21) Application number: 90303334.8

(51) Int. Cl.5: G02F 1/1347

(22) Date of filing: 29.03.90

(30) Priority: 31.03.89 JP 82410/89

(43) Date of publication of application:
03.10.90 Bulletin 90/40

(84) Designated Contracting States:
DE FR GB

(71) Applicant: SHARP KABUSHIKI KAISHA
22-22 Nagaike-cho Abeno-ku
Osaka 545(JP)

(72) Inventor: Hayashi, Mariko
2-2-28, Andoji-machi, Chuo-ku
Osaka-shi, Osaka(JP)
Inventor: Kimura, Naofumi
29-104, 2-1-2, Ukyo
Nara-shi, Nara-ken(JP)
Inventor: Hatano, Akitsugu
Akebono-ryo, 2613-1, Ichinomoto-cho
Tenri-shi, Nara-ken(JP)

(74) Representative: Jones, Colin et al
W.P. THOMPSON & CO. Coopers Building
Church Street
Liverpool L1 3AB(GB)

(54) **A double-layered liquid crystal display apparatus.**

(57) A double-layered liquid-crystal display apparatus comprises a first liquid-crystal layer (7) for voltage application to electrodes (2a, 2b) for display and a second liquid-crystal layer (8) within any such electrodes. The direction of orientation of the liquid-crystal molecules in the first liquid-crystal layer (7) that is the nearest to the second liquid-crystal layer (8) is at right angles to that of the liquid-crystal molecules in the second liquid-crystal layer (8) that is the nearest to the first liquid-crystal layer (7). The angle ($\theta_1$) of twist of the liquid-crystal molecules in the first liquid-crystal layer (7) and the angle ($\theta_2$) of the twist of theliquid-crystal molecules of the second liquid-crystal layer (8) satisfy the relationship:
$\theta_2 > \theta_1$.

Fig. 1

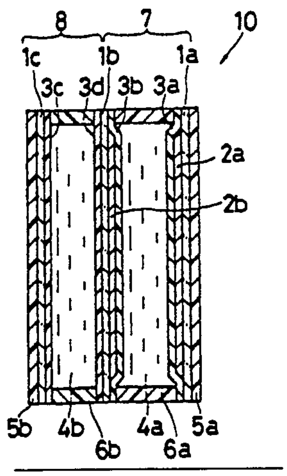


EP 0 390 544 A2

# LIQUID CRYSTAL DISPLAY APPARATUS

This invention relates to a liquid-crystal display apparatus. More particularly, it relates to a double-layered liquid-crystal display apparatus that makes use of a twisted nematic display process that makes possible a black-and-white display with a high contrast ratio without any coloring and also a satisfactory color display.

Liquid-crystal display devices are used in a wide variety of applications, such as in the displays of watches, electronic calculators, computer terminals, and word processors, and in television, etc. In recent years, there has come to be a demand for multicolored and full-color liquid-crystal display devices. Such devices are already in use in the fields of graphic display and screen display. In the color display devices that are now in wide general use in a variety of applications, there is a color filter layer on the inside surface of the liquid-crystal cell, and various colors are made to appear by the switching of light from the liquid-crystal cell. In this kind of color display device, as a rule, the twisted nematic (TN) display mode is employed. In the TN display mode of a liquid-crystal display device, the liquid-crystal molecules are gradually twisted in their orientation from one substrate of the liquid-crystal cell to another substrate, and the liquid-crystal molecules that are close to the two substrates are in orientations that are at a 90° angle with respect to each other, whereby a liquid-crystal display device of the TN display mode of high contrast is obtained.

With a liquid-crystal cell that makes use of liquid crystals of the TN display mode, it is not possible to obtain a display with uniform light intensity throughout the entire spectrum of visible light, because the angle of rotation of the linear polarization light that passes through the liquid-crystal cell is made to depend strongly on the wavelength of the light. For example, with a color liquid-crystal display device that has color filters for red, green, and blue patterned on the substrate on one side of the liquid-crystal cell, the intensity of light after it passes through the color filters is not uniform, so it is not possible to obtain a satisfactory color display. In particular, with a so-called normally closed type liquid-crystal cell, in which the axis of absorbance of two polarizing plates is made to be parallel and light is cut off when there is no voltage applied to the liquid-crystal layer, the leakage of light when there is no applied voltage gives rise to strong color.

With a color liquid-crystal display device that causes light switching by the use of a liquid-crystal cell with a TN display mode that has a color filter layer, there are two main kinds of liquid-crystal driving methods. One of them involves an active-matrix driving method that uses a liquid-crystal cell that has picture elements with non-linear devices such as diodes, or that has switching elements such as thin-film transistors. The other method involves a multiplex driving method in which on two substrates that have sandwiched a liquid-crystal layer therebetween, there are patterned transparent electrodes at right angles to each other, and the liquid crystals are successively driven by the application of voltage to each electrode.

In the former method with an active-matrix drive, there must be non-linear devices such as diodes and switching elements such as thin-film transistors in the liquid-crystal cell, so the production process for the liquid-crystal cell is complicated, and there is also the disadvantage of high cost.

In the latter method with a multiplex drive, there must be steep changes in the optical properties of the liquid crystals in the vicinity of the threshold value of the voltage applied to the liquid crystals. The reason is that in the vicinity of this value, the steep changes of the optical properties control the contrast ratio. To improve these threshold characteristics, a liquid-crystal cell has been proposed that uses supertwisted nematic (STN) liquid crystals with liquid-crystal molecules that are twisted at angles of 180-270° in a liquid-crystal layer. In a liquid-crystal cell that makes use of these STN liquid crystals, there is a steep change in the optical permeability ratio in the vicinity of the threshold value of the applied voltage, and even when the number of transparent electrodes is increased so as to increase the duty ratio, it is possible to obtain a high contrast ratio. In addition, compared to the TN display mode, the contrast ratio characteristics with regard to the angle of vision are almost axially symmetrical. However, in a liquid-crystal cell that makes use of these STN liquid crystals, there is more dependence of the optical permeability ratio on wavelength than in liquid-crystal cells that make use of the TN display mode, because the liquid-crystal cell with the STN liquid crystals makes use of the birefringence effects of liquid crystals. Therefore, the problems of light leakage and undesired color are increased when this method is used in a device with full-color display.

To improve the dependency on the wavelength of light that permeates the liquid-crystal layer, the optical mode interference method (OMI) and the host-guest method have been used. In the OMI method, the birefringence of the STN liquid crystals (the difference between the refraction index in a direction parallel to the axis of the liquid-crystal molecules and the refraction index in a direction at right angles to the axis of the liquid-crystal molecules), the angle of twist of the liquid crystals, the thickness of the liquid-crystal layer, the pitch of the twist of the liquid-crystal layer, the pretilt angle, the angle between the direction of the axis of polarization light of the polarizing plate and the axis of the liquid crystals in the vicinity of the polarizing plate, and so on can be mutually adjusted to make the optical conditions optimal. In the host-guest method, liquid crystals to which bicolored color elements that absorb light of a given wavelength are added are used, so when light is obstructed by the liquid crystals, the bicolored color elements absorb any light that passes through the liquid-crystal layer, and accordingly leakage of light and undesired color are both prevented. However, with either of these two methods, there arise the problems that the surface of the display becomes dark and that the contrast ratio is not satisfactory.

To solve the above-mentioned problems, a double-layered liquid-crystal display apparatus has been put into practice in which a compensating liquid-crystal cell for compensating for the dependency on the wavelength of light that permeates the liquid-crystal cells for use in the display is layered on a liquid-crystal cell that makes use of STN liquid crystals.

In such a double-layered liquid-crystal display apparatus, the compensating liquid-crystal cells cause elliptical polarization light that has passed through the liquid-crystal cells for use in the display to become linear polarization light.

Therefore, in a normally black mode that is provided with a polarizing plate in such a way that the display will be black when, for example, there is no voltage applied in the space between the liquid-crystal layers of the liquid-crystal cell for display (when the voltage is applied so that the display is in the "off" state), the polarizing plate completely cuts off the linear polarization light from the compensating liquid-crystal cell when off-voltage is applied, and it is possible to have a black display without leakage of light. However, when on-voltage is applied to the liquid-crystal layer of the liquid-crystal cell for display, the light that has been incident upon the liquid-crystal cell for display is incident upon the compensating liquid-crystal cell in a nearly linear polarization state, and the birefringence properties of this compensating liquid-crystal cell cause the linear polarization light to become elliptical polarization light. This elliptical polarization light is dependent upon the wavelength of light, so when it passes through the polarizing plate, it becomes, for instance, white light with a blue tinge. This kind of coloration phenomenon occurs because of interference.

Figure 6 of the accompanying drawings shows the relationship between the voltage applied to the liquid-crystal display cell and the transmittance at each wavelength of light R (red; $\lambda = 610$ nm), light G (green; $\lambda = 550$ nm), and light B (blue; $\lambda = 450$ nm) in a conventional double-layered liquid-crystal display apparatus of the normally black mode. With this double-layered liquid-crystal display apparatus, both the angle $\theta_1$ of twist of the liquid-crystal molecules of the liquid-crystal cell for display and the angle $\theta_2$ of twist of the liquid-crystal molecules of the compensating liquid-crystal cell are set at 240°, and the directions of rotation of the twist are opposite to each other. As shown in Figure 6, at the off-voltage (about 2.0 V), all light at each wavelength is effectively blocked, and the display is black. However, when the on-voltage is applied (at about 2.2 V), the blue light, B, has a relatively large transmittance, and thus this blue light B passes through the liquid-crystal layers; however, red light, R, has a relatively small transmittance. Because of this, when white is being displayed, the white is displayed with a blue tinge. Thus, when for example, the double-layered liquid-crystal display apparatus is used for a color display, it is not possible for the color display to be clear and distinct.

Also, with a double-layered liquid-crystal display apparatus of the normally white mode, when the off-voltage is applied, the light of each wavelength passes through the liquid-crystal layers with a high transmittance, so a clear and distinct display of white is possible. However, when the on-voltage is applied, as described above, light that passes through the two liquid-crystal layers is elliptical polarization light, and it cannot be blocked at each wavelength. For this reason, there arise the problems that light leakage occurs in a black display and that the contrast ratio is lowered.

The double-layered liquid-crystal display apparatus of this invention, which overcomes the above-discussed and numerous other disadvantages and deficiencies of the prior art, comprises a first liquid-crystal layer for voltage application for display, which has liquid-crystal molecules with twisted orientation, and 3 second liquid-crystal layer that has liquid-crystal molecules that have a direction of twisted orientation that is opposite to that of the liquid-crystal molecules in the first liquid-crystal layer, wherein the direction of orientation of the liquid-crystal molecules in the first liquid-crystal layer that is the nearest to the second liquid-crystal layer is at right angles to that of the liquid-crystal molecules in the second liquid-crystal layer that is the nearest to the first liquid-crystal layer; and the angle $\theta_1$ of twist of the liquid-crystal molecules in the first liquid-crystal layer and the angle $\theta_2$ of twist of the liquid-crystal molecules of the second liquid-crystal layer satisfy the following relationship:

$\theta_2 > \theta_1$

In a preferred embodiment, the angle $\theta_1$ of twist of the liquid-crystal molecules in the first liquid-crystal

layer and the angle $\theta_2$ of twist of the liquid-crystal molecules in the second liquid-crystal layer satisfy the following relationship:

$5° \leqq \theta_2 - \theta_1 \leqq 70°$

In a preferred embodiment, the angle $\theta_1$ of twist of the liquid-crystal molecules in the first liquid-crystal layer satisfies the following relationship:

$180° \leqq \theta_1 \leqq 360°$

In a preferred embodiment, the pretilt angle of the first liquid-crystal layer is 10° or less, and the pitch P of twist of the liquid-crystal molecules in the first liquid crystal layer, the thickness $d_1$ of the first liquid-crystal layer, and the angle $\theta_1$ of twist of the liquid-crystal molecules of said first liquid- crystal layer satisfy the following relationship:

$\theta_1/360° - 1/4 < d/P \leq \theta_1/360°$

In a preferred embodiment, the relationship between the product $\Delta n_1 \cdot d_1$ of the birefringence $\Delta n_1$ and the thickness $d_1$ of the first liquid-crystal layer and the product $\Delta n_2 \cdot d_2$ of the birefringence $\Delta n_2$ and the thickness $d_2$ of the second liquid-crystal layer is represented by the following inequality:

$0.6 < (\Delta n_1 \cdot d_1/\Delta n_2 \cdot d_2) < 1.4$

In a preferred embodiment, the absolute values of the product $\Delta n_1 \cdot d_1$ and the product $\Delta n_2 \cdot d_2$ are in the range of 0.3 to 3.0.

In a preferred embodiment the double-layered liquid-crystal display apparatus further comprises a polarizer on the outside of said first liquid-crystal layer and an analyzer on the outside of said second liquid-crystal layer, wherein angles $\alpha$, $\beta$, and $\psi$ satisfy the following relationship:

$(\theta_1 - 180)/2-10 \leq \beta \leq (\theta_1 - 180)/2 + 30 \ \alpha + \theta_1 - \theta_2 - 20 \leq \psi \leq \alpha + \theta_1 - \theta_2 + 20$

wherein $\alpha$ is the angle between the direction of orientation of the liquid-crystal molecules in said first liquid-crystal layer that is the nearest to said second liquid-crystal layer and the direction of orientation of the liquid-crystal molecules in said second liquid-crystal layer that is the nearest to said first liquid-crystal layer, $\beta$ is the angle between the direction of orientation of the liquid-crystal molecules in said first liquid-crystal layer near said polarizer and the direction of polarization light of said polarizer, and $\psi$ is the angle between the direction of polarization light of said polarizer and the direction of polarization light of said analyzer.

It was experimentally found by the inventors of this invention that with the double-layered liquid-crystal display apparatus with the above-mentioned structure, even if the optical characteristics of the light that passes through the first liquid-crystal layer to which a voltage has been applied change, it is possible to decrease the dependency on wavelength of the light that passes through the first liquid-crystal layer and tne second liquid-crystal layer. Therefore, if a first liquid-crystal layer and a second liquid crystal layer are provided in, for example, the space between the polarizer and the analyzer, it is possible for light of all wavelengths to pass through or to be blocked efficiently.

Thus, the invention described herein makes possible the objective of providing a double-layered liquid-crystal display apparatus in which regardless of whether a voltage is applied to the first liquid-crystal layer or not, the dependency on wavelength of the transmitted light is lowered, which prevents light leakage, and makes it possible for a black-and-white display without unwanted color and for a satisfactory color display to be obtained with a high contrast ratio.

This invention is further described, by way of example with reference to the accompanying drawings, in which:-

Figure 1 is a cross-sectional view showing a double-layered liquid-crystal display apparatus of this invention.

Figures 2a and 2b, respectively, are diagrams showing twists of liquid-crystal molecules in the right and left directions.

Figure 3 is a graph showing the relationship between the difference $(\theta_2 - \theta_1)$ between the angles of twist of the liquid-crystal layers 4a and 4b of the double-layered liquid-crystal display apparatus of Figure 1 and the contrast ratio.

Figure 4 is a graph showing the relationship between the difference $(\theta_2 - \theta_1)$ between the angles of twist of the liquid-crystal layers 4a and 4b of the double-layered liquid-crystal display apparatus of Figure 1 and the magnitude of the color drift $\Delta E$ from the white light of the light that passes through the liquid crystal display apparatus of Figure 1.

Figure 5 is a graph showing the relationship between the voltage applied to the double-layered liquid-crystal display apparatus of Figure 1 and the light transmittance.

Figure 6 is a graph showing the relationship between the voltage applied to a conventional double-layered liquid-crystal display apparatus and the light transmittance.

Figure 1 shows a double-layered liquid-crystal display apparatus 10 of this invention, which comprises a liquid-crystal cell 7 for display and liquid-crystal cell 8 for compensation that is layered on the liquid-crystal

cell 7. This liquid-crystal cell 8 for compensation acts as a compensating plate to cancel the component of elliptical polarization light of the light that passes through the liquid-crystal cell 7 for display. This compensating plate makes it possible to obtain a clear display.

The liquid-crystal cell 7 for display comprises two transparent substrates 1a and 1b that face each other. The substrates 1a and 1b have a number of transparent electrodes 2a and 2b, respectively, on their inner surfaces that are display electrodes. The transparent electrodes 2a and 2b are made from a thin film about 1500 Å thick by etching of the desired pattern of ITO (a film the main component of which is oxidized indium) that has been vapor-deposited by the sputtering technique. On both surfaces of the substrates 1a and 1b containing transparent electrodes 2a and 2b, respectively, orientation films 3a and 3b are formed, which are treated by being rubbed with a cloth. These two transparent substrates 1a and 1b have a liquid-crystal substance in the space therebetween, forming a liquid-crystal layer 4a. The sealant 6a acts to seal the ends of the substrates 1a and 1b.

The liquid-crystal cell 8 for compensation has two transparent substrates 1b and 1c that face each other. Orientation films 3c and 3d are disposed on the surfaces of the substrates 1b and 1c that face each other. The transparent substrates 1b and 1c are not provided with transparent electrodes. One of the transparent substrates, 1b, also acts as the transparent substrate of the liquid-crystal cell 7. In the space between the transparent substrates 1b and 1c, there is a liquid-crystal material, which forms a second liquid-crystal layer 4b. Sealant 6b is used to seal the ends of the substrates 1b and 1c.

On the outside surfaces of liquid-crystal cell 7 for display and liquid-crystal cell 8 for compensation, there are formed a polarizer 5a and analyzer 5b that make use of an ordinary iodine polarizing plate. The directions of polarization of the polarizer 5a and the analyzer 5b are set so that this double-layered liquid-crystal display apparatus 10 can work as an apparatus of the normally black type. The setting of the directions of polarized light of polarizer 5a and analyzer 5b is discussed below.

These two liquid-crystal cells, 7 and 8, use as the materials of their transparent substrates 1a, 1b, and 1c, for example, glass, acryl, and so on. As the transparent electrodes 2a and 2b, it is possible to use, in addition to ITO, any transparent conductive film such as nesa film. The orientation films 3a, 3b, 3c, and 3d are formed about 500 Å thick by spin coating of polyimide. It is also possible to use inorganic films such as $SiO_2$, SiO, etc., or organic films such as polyvinyl alcohol, nylon, acryl, etc.

As the liquid-crystal material used for the first and second liquid-crystal layers 4a and 4b, it is possible to use any kind of liquid crystals, but in this example, EX-02 (Rodic), which has a birefringence ratio of 0.13, was used. As an optically active substance, CB-15 (Merck) was added at the concentration of 1.40 wt% to the second liquid-crystal layer 4b.

CB-15 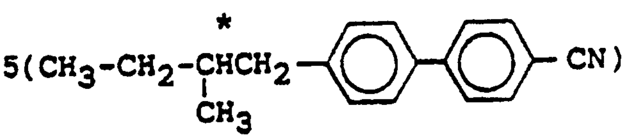

Also, as an optically active substance, cholesteryl nonanoate S-811 (Merck) is added at the concentration of 0.8 wt% to the first liquid-crystal layer 4a.

With the addition of these optically active substances, the directions of twist of the two liquid-crystal layers 4a and 4b became opposite to each other. That is, the direction of twist of the liquid-crystal molecules of liquid-crystal layer 4b is to the right, as shown in Figure 2a, and the direction of twist of the liquid-crystal molecules of the liquid-crystal layer 4a of the first layer is to the left, as shown in Figure 2b.

In general, when a voltage to be applied to a liquid-crystal layer is changed, in order to obtain steep threshold characteristics of the transmittance of light, the specific pitch P of the twist of liquid-crystal molecules in one cell layer is very important. The ratio of the thickness d of the liquid-crystal layer to the pitch p of the twist of the liquid-crystal molecules, d/p, is preferably set by the use of experimental data as follows:

$\theta/360° - 1/4 < d/p \leq \theta/360°$,

wherein $\theta$ is the angle of twist of liquid-crystal molecules. This requirement applies in the case where the pretilt angle of the liquid crystals is about 10° or less. In the case where the pretilt angle exceeds 10°, the range of this value of d/p is different.

The liquid-crystal cells 7 and 8 of this invention are constructed so that the following relationship can be satisfied because the maximum contrast ratio exists therein:

$0.6 < \Delta n_1 \cdot d_1 / \Delta n_2 \cdot d_2 < 1.4$

wherein $\Delta n_1$ and $d_1$ are the birefringence and the thickness of the first liquid-crystal layer 4a, respectively,

and $\Delta n_2$ and $d_2$ are the birefringence and the thickness of the second liquid-crystal layer 4b, respectively.

Moreover, in view of brightness and contrast ratio, the absolute values of $\Delta n_1 \cdot d_1$ and of $\Delta n_2 \cdot d_2$ are preferably set to be in the range of 0.3 to 3.0.

In view of the display contrast and the characteristics of the angle of vision, the angle $\theta_1$ of twist of the liquid-crystal molecules of the first liquid-crystal layer 4a is preferably set in the range of from 180° to 360°; that is,

$180° \leqq \theta_1 \leqq 360°$ (1)

If $\theta_1$ is greater than 360°C, a domain will develop when a voltage is applied, so that it will no longer be possible to obtain a high contrast ratio.

In this example, the thickness $d_1$ of the first liquid-crystal layer 4a was set at 6.0 µm, the thickness $d_2$ of the second liquid-crystal layer 4b was set at 5.7 µm, the pitch $P_1$ of the liquid-crystal molecules of the first liquid-crystal layer 4a was set at 10 µm, and the pitch $P_2$ of the liquid-crystal molecules of the second liquid-crystal layer 4b was set at 10 µm. The pretilt angle of the liquid-crystal molecules on the top of the transparent substrate was about 8°, and the angle $\alpha$ between the directions of the orientation of the liquid-crystal molecules that are the nearest to each other in the first liquid-crystal layer 4a and the second liquid-crystal layer 4b was about 90°.

Moreover, in view of the display contrast and brightness, the direction of polarization light of the polarizing plate was set so as to satisfy the following two conditions.

$(\theta_1 - 180)/2 - 10 \leq \beta \leq (\theta_1 - 180)/2 + 30$

$\alpha + \theta_1 - \theta_2 - 20 \leq \psi \leq \alpha + \theta_1 - \theta_2 + 20$

wherein $\beta$ is the angle between the direction of polarization light of the polarizer 5a and the direction of orientation of the liquid-crystal molecules on the incident light side of the liquid-crystal cell 7, and $\psi$ is the angle between the polarizer 5a and the analyzer 5b.

With the values set as mentioned above, the difference $(\theta_2 - \theta_1)$ between the angles of twist of the liquid-crystal molecules of the liquid-crystal layers 4a and 4b was changed, and an experiment was carried out concerning light transmittance.

In such a double-layered liquid-crystal display apparatus 10, the relationship between the difference $(\theta_2 - \theta_1)$ of the angles of twist of the liquid-crystal molecules of liquid-crystal layers 4a and 4b and the contrast ratio, which is the ratio of the amount of light that passes through per unit area of the liquid-crystal layers at the time when an on-voltage (about 2.2 V) is applied and at the time when an off-voltage (about 2.0 V) is applied, is shown in Figure 3. The results shown in Figure 3 are for the case of the driving of the double-layered liquid-crystal display apparatus 10 at a duty ratio of 1/100. As can be seen from Figure 3, there is near symmetry when the difference $(\theta_2 - \theta_1)$ in the angles of twist is equal to zero (i.e., $\theta_2 - \theta_1 = 0$), and the contrast ratio increases as the absolute value of this difference becomes smaller.

In order to obtain experimentally a contrast ratio of the minimum contrast ratio, CP (about 20), that is necessary for practical liquid-crystal display apparatuses, or a larger ratio, it is preferable that the difference $(\theta_2 - \theta_1)$ in the angle of twist be 70° or less; that is, that

$\theta_2 - \theta_1 \leqq 70°$ (2)

The relationship between the magnitude of the color drift ΔE of the light, which passes through the liquid-crystal display apparatus, from the white light that is a point in the CIE (Commission International de L' Eclairage; L*, U*, V*) color space defined by a standard light source when an on-voltage is applied and the difference $(\theta_2 - \theta_1)$ in the angles of twist is shown in Figure 4. Here, ΔE is set by the following equation:

$$\Delta E = \sqrt{(\Delta U^*)^2 + (\Delta V^*)^2}$$

wherein ΔU* and ΔV*, respectively, are distances on the U axis and V axis from a point that is the white light in the CIE (L*, U*, V*) color space that is defined by a standard light source to another point that is the light that has passed through the liquid-crystal display apparatus. As the standard light, $D_{65}$ with a color temperature of 6500 K was used.

As shown in Figure 4, the larger the difference $(\theta_2 - \theta_1)$ in the angles of twist, the closer the color tint was to the white of the standard light from a light source. Therefore, it is necessary to set the angles $\theta_1$ and $\theta_2$ of twist so that they satisfy the following relationship:

$\theta_2 > \theta_1$

There is a slight discrepancy between the perception of the phenomenon of unwanted color and the direction of color drift from white, but in general, it is possible for a clear and distinct white to be perceived provided that ΔE is about 30 or less. Thus, it is preferred, as seen from Figure 4, that the difference $(\theta_2 -$

$\theta_1$) in the angles of twist be set at 5° or more; that is, that

$\theta_2 - \theta_1 \geq 5°$ (3)

It is preferable that the difference ($\theta_2 - \theta_1$) mentioned above be set from Equations 2 and 3 as shown in the following equation.

$5° \leq \theta_2 - \theta_1 \leq 70°$ (4)

Figure 5 shows the relationship of the voltage applied to the liquid-crystal layer 4b when the angle $\theta_1$ of twist of the liquid-crystal molecules of the first liquid-crystal layer 4a was set at 240° and when the angle $\theta_2$ of twist of the liquid-crystal molecules of the second liquid-crystal layer 4b was set at 270° to the transmittance of light of different wavelengths that passes through the double-layered liquid-crystal display apparatus 10. The wavelengths measured were 610 nm for red (R), 550 nm for green (G), and 450 nm for blue (B).

As described in the section on the description of the prior art, the relationship between the voltage applied and the light transmittance when the angles $\theta_1$ and $\theta_2$ of twist are both 240° is as is shown in Figure 6, which indicates that the transmittance of the different wavelengths is different when an on-voltage (about 2.2 V) is applied, so when white is being displayed, the white is seen as being tinged with some color. On the contrary, in this example of the invention, as shown in Figure 5, the light transmittance at each wavelength at the time of the on-voltage (about 2.2 V) being applied is about 50-60%, and it is possible to obtain a clear and distinct white display.

Thus, a clear and distinct white display can be obtained, as seen from Figure 4, provided that $\Delta E$ is equal to 13 when the difference ($\theta_2 - \theta_1$) in the angles of twist is equal to 30° (i.e., $\theta_2 - \theta_1 = 30°$), although $\Delta E$ is equal to 35 when the difference ($\theta_2 - \theta_1$) in the angles of twist is equal to zero (i.e., $\theta_2 - \theta_1 = 0$).

Also, when an off-voltage (about 2.0 V) is applied, light of each wavelength will be blocked effectively, and a black display without color leakage will be obtained.

Even if the angles $\theta_1$ and $\theta_2$ are set with $\theta_1 = 240°$ and $\theta_2 = 300°$, a clear and distinct white display can be obtained, as well.

In the example described above, the situation when $\theta_1 = 240°$ is explained, but when the same kind of experiments were performed with $\theta_1$ in the range of 180° to 360°, and with $\theta_2$ set so as to satisfy Equation 4, all combinations tested gave a clear and distinct white display.

In this example, the transparent electrodes 2a and 2b of liquid-crystal cell 7 had on their inner sides a color filter layer for red, green, and blue that was made from a gelatin film or the like, and when a color display was carried out by simple multiplex drive, an extremely clear and distinct color image was obtained.

In this example, each color element was constructed with a thin-film transistor (TFT) liquid-crystal panel with a TFT and color filter, and when a color display was carried out by active matrix drive, a very clear and distinct color image was obtained.

As described above, with this invention, even when the optical characteristics of the first liquid-crystal layer are changed when a voltage is applied to the first liquid-crystal layer, the dependence on wavelength of the light that passes through the first liquid-crystal layer and the second liquid-crystal layer can be still lowered.

Therefore, regardless of whether a voltage is applied to the first liquid-crystal layer or not, the dependency on wavelength of the transmitted light is lowered, which prevents light leakage, and makes it possible for a black-and-white display without unwanted color and for a satisfactory color display to be obtained with a high contrast ratio.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A double-layered liquid-crystal display apparatus comprising:

a first liquid-crystal layer (7) for voltage application for display, which has liquid-crystal molecules with twisted orientation, and

a second liquid-crystal layer (8) that has liquid-crystal molecules that have a direction of twisted orientation that is opposite to that of the liquid-crystal molecules in the first liquid-crystal layer (7), characterised in that the direction of orientation of the liquid-crystal molecules in the first liquid-crystal layer (7) that is the

nearest to the second liquid-crystal layer (8) is at right angles so that of the liquid-crystal molecules in the second liquid-crystal layer (8) that is the nearest to the first liquid-crystal layer (7); and the angle $\theta_1$ of twist of the liquid-crystal molecules in the first liquid-crystal layer (7) and the angle $\theta_2$ of twist of the liquid-crystal molecules of the second liquid-crystal layer (8) satisfy the following relationship:

$\theta_2 > \theta_1$ .

2. A double-layered liquid-crystal display apparatus according to claim 1, wherein the angle $\theta_1$ of twist of the liquid-crystal molecules in the first liquid-crystal layer and the angle $\theta_2$ of twist of the liquid-crystal molecules in the second liquid-crystal layer satisfy the following relationship:

$5° \leqq \theta_2 - \theta_1 \leqq 70°$.

3. A double-layered liquid-crystal display apparatus according to claim 1 or 2, wherein the angle $\theta_1$ of twist of the liquid-crystal molecules in the first liquid-crystal layer satisfies the following relationship:

$180° \leqq \theta_1 \leqq 360°$.

4. A double-layered liquid-crystal display apparatus according to claim 1, 2 or 3, wherein the pretilt angle of the first liquid-crystal layer is 10° or less, and the pitch P of twist of the liquid-crystal molecules in the first liquid-crystal layer, the thickness $d_1$ of the first liquid-crystal layer, and the angle $\theta_1$ of twist of the liquid-crystal molecules of said first liquid-crystal layer satisfy the following relationship:

$\theta_1/360° - 1/4 < d/P \leq \theta_1/360°$.

5. A double-layered liquid-crystal display apparatus according to any preceding claim, wherein the relationship between the product $\Delta n_1 . d_1$ of the birefringence $\Delta n_1$ and the thickness $d_1$ of the first liquid-crystal layer and the product $\Delta n_2 . d_2$ of the birefringence $\Delta n_2$ and the thickness $d_2$ of the second liquid-crystal layer is representd by the following inequality:

$0.6 < (\Delta n_1 . d_1/\Delta n_2 . d_2) < 1.4$.

6. A double-layered liquid-crystal display apparatus according to any preceding claim, wherein the absolute values of the product $\Delta n_1 . d_1$ and the product $\Delta n_2 . d_2$ are in the range of 0.3 to 3.0.

7. A double-layered liquid-crystal display apparatus according to any preceding claim, which further comprises a polarizer (5a) on the outside of said first liquid-crystal layer (7) and an analyzer (5b) on the outside of said second liquid-crystal layer (8),

wherein angles $\alpha$ , $\beta$ , and $\psi$ satisfy the following relationship:

$(\theta_1 - 180)/2 - 10 \leq \beta \leq (\theta_1 - 180)/2 + 30$

$\alpha + \theta_1 - \theta_2 - 20 \leq \psi \leq \alpha + \theta_1 - \theta_2 + 20$

wherein $\alpha$ is the angle between the direction of orientation of the liquid-crystal molecules in said first liquid-crystal layer that is the nearest to said second liquid-crystal layer and the direction of orientation of the liquid-crystal molecules in said second liquid-crystal layer that is the nearest to said first liquid-crystal layer, $\beta$ is the angle between the direction of orientation of the liquid-crystal molecules in said first liquid-crystal layer near said polarizer and the direction of polarization light of said polarizer, and $\psi$ is the angle between the direction of polarization light of said polarizer and the direction of polarization light of said analyzer.

Fig. 1

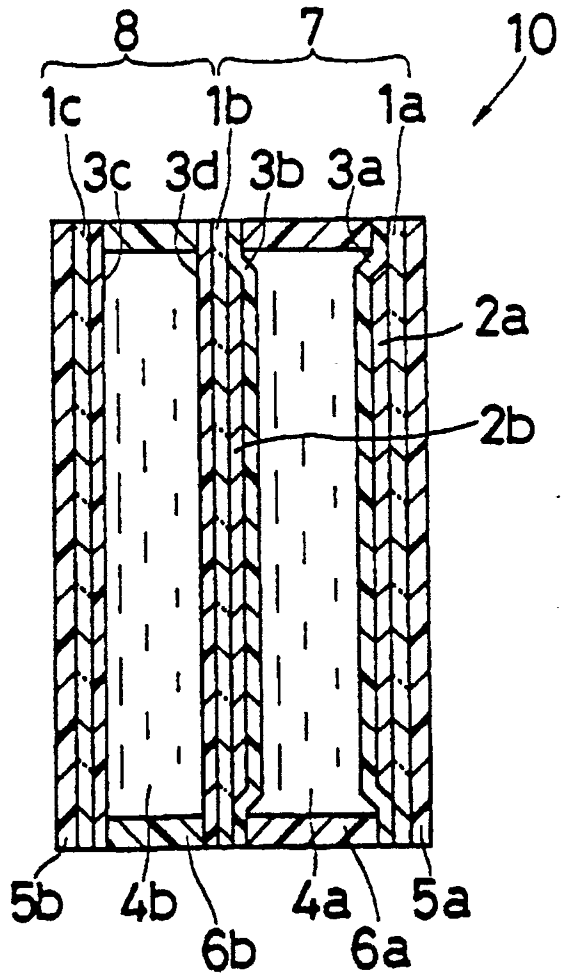

Fig. 2a

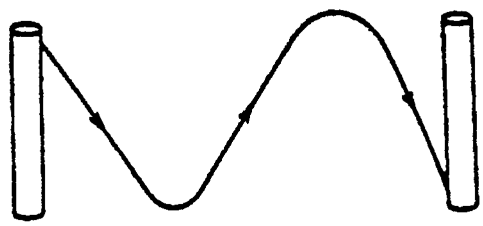

Fig. 2b

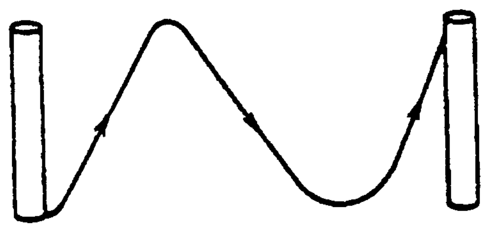

Fig. 3

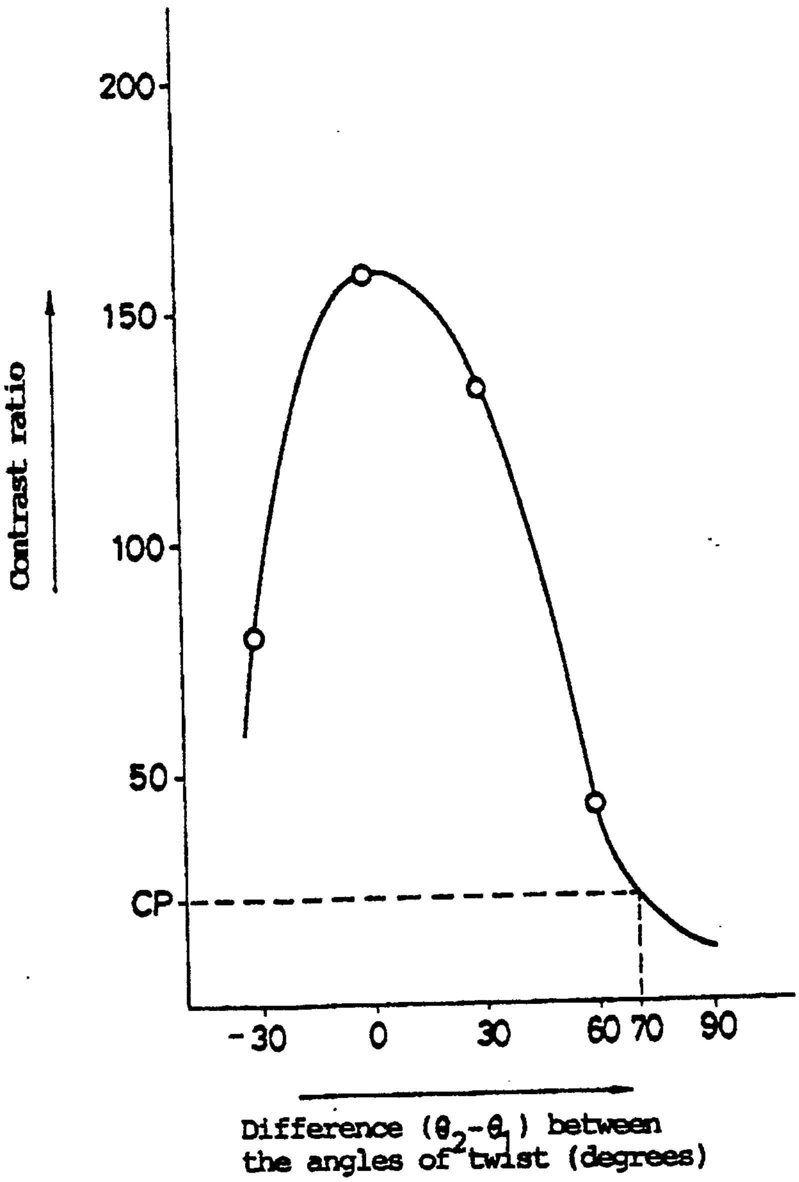

200
150
100
50
CP
Contrast ratio
-30
0
30
60
70
90
Difference ($\theta_2$-$\theta_1$) between
the angles of twist (degrees)

Fig. 4

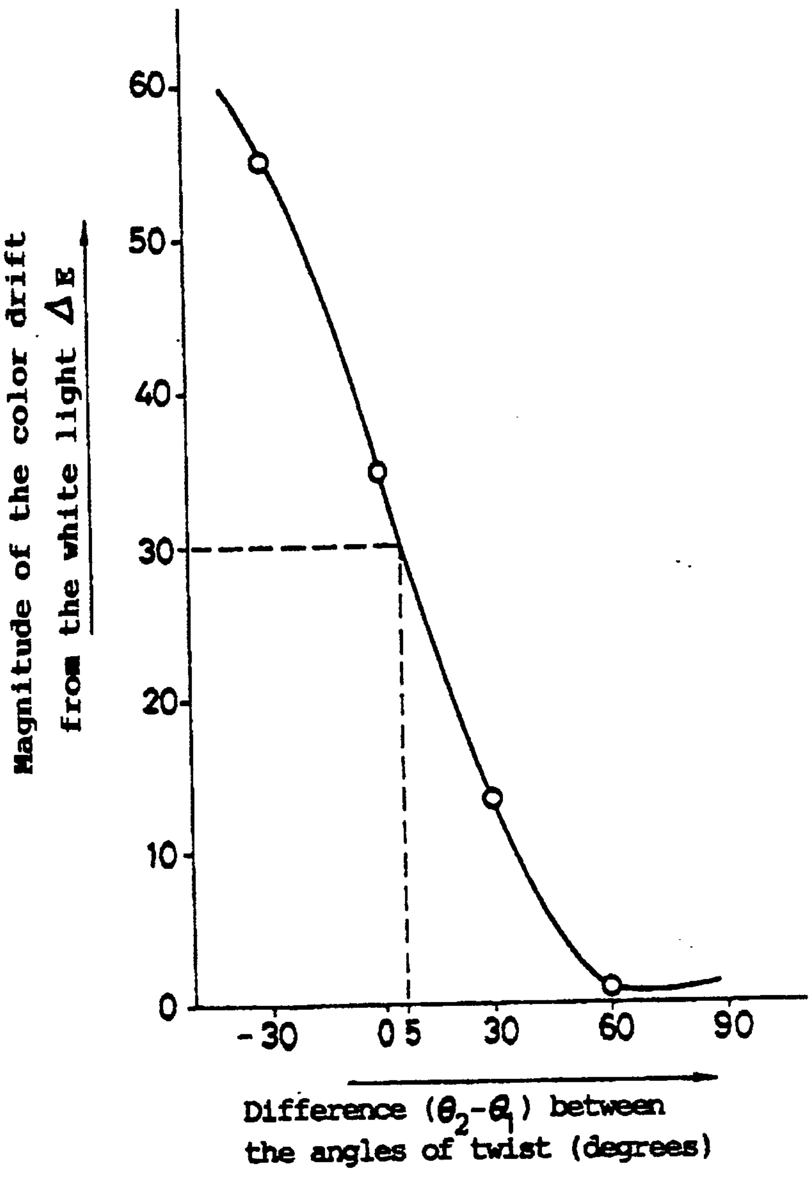
Magnitude of the color drift
from the white light ΔE
60
50
40
30
20
10
0
-30
0 5
30
60
90
Difference ($\theta_2$-$\theta_1$) between
the angles of twist (degrees)

Fig. 5

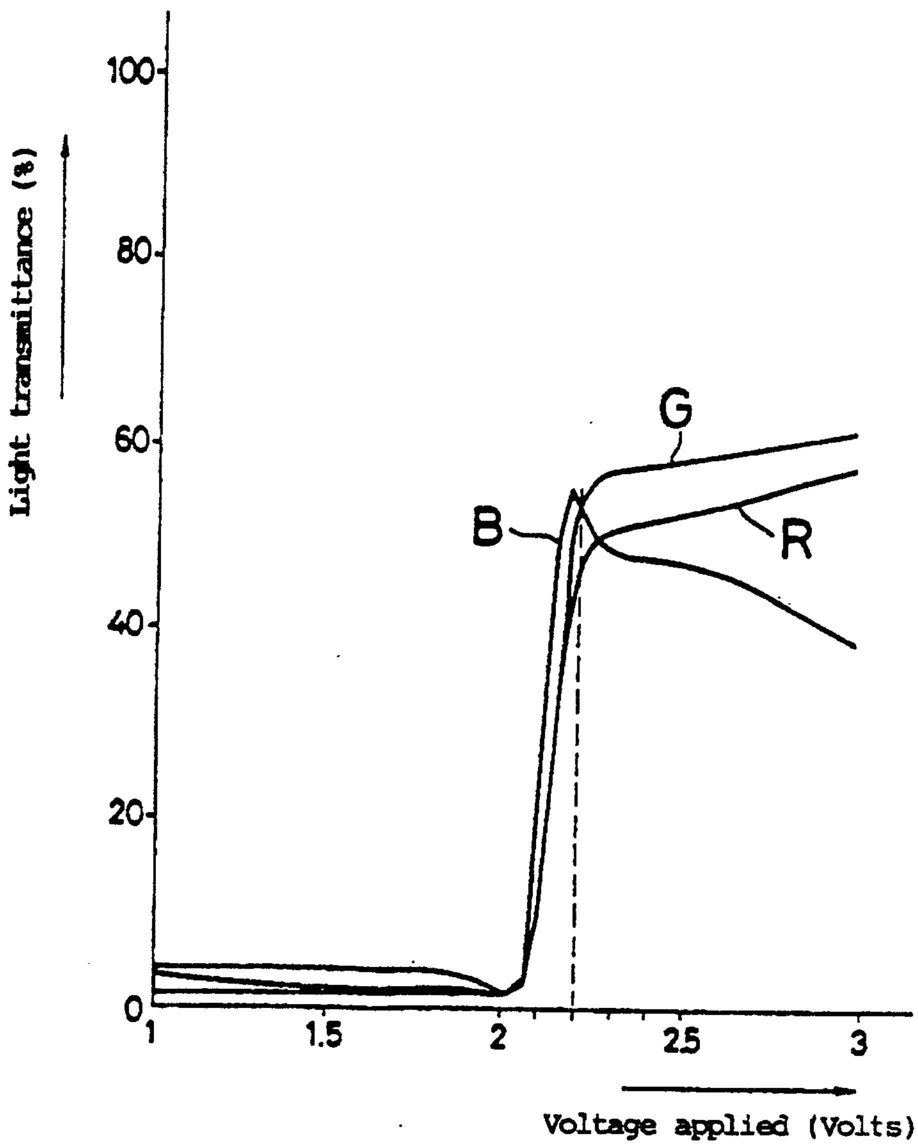
100
80
60
40
20
0
Light transmittance (%)
1
1.5
2
2.5
3
Voltage applied (Volts)
G
B
R

Fig. 6

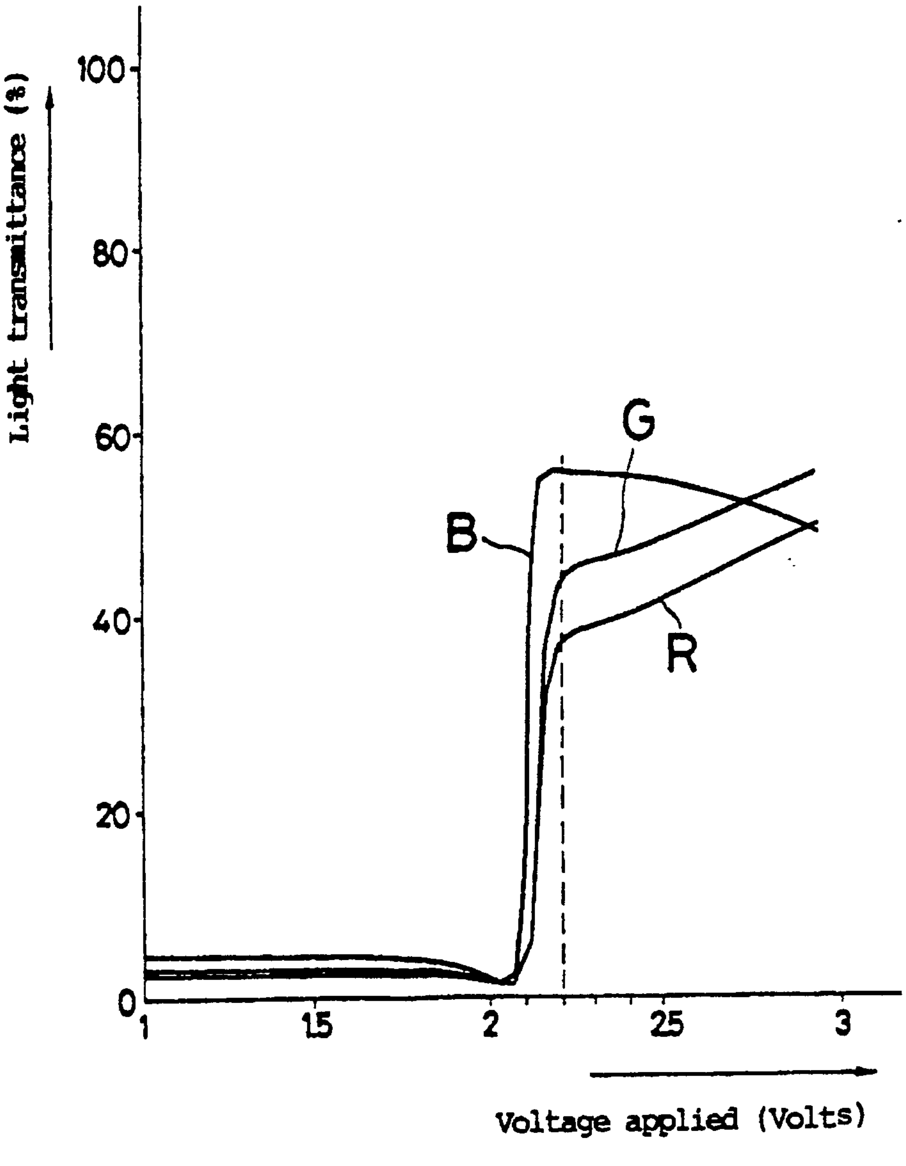


Prior art